# EUROPEAN PATENT APPLICATION

(11) **EP 1 519 221 A1**
(43) Date of publication of application: **30.03.2005**
(21) Application number: 04255716.5
(22) Date of filing: 20.09.2004
(51) Int. Cl.: G03B 19/04, H01M 2/10

(54) **Lens-fitted photo film unit and manufacturing method thereof**

(30) Priority: 24.09.2003 JP 2003332270; 24.09.2003 JP 2003332525
(71) Applicant: Fuji Photo Film Co., Ltd., Kanagawa-ken (JP)
(72) Inventor: Noguchi, Osamu, c/o Fuji Photo Film Co. Ltd., Kanagawa (JP); Okoyama, Kazuo, c/o Fuji Photo Film Co. Ltd., Tokyo (JP)
(74) Representative: Stevens, Jason Paul

(57) **Abstract**

A flash unit (27) of a lens-fitted photo film unit has a positive contact member (48) and a negative contact member (49) for holding a battery between them. A main body portion (29) has a couple of supporting projections (35,36) formed integrally therewith. With a battery (50) being nipped between the positive and negative contact members, the flash unit is mounted to the main body portion, so the battery (50) is securely placed between the supporting projections. On manufacturing another lens-fitted photo film unit that contains a shorter battery (66) than the battery (50), the shorter battery (66) is connected in series to a conductive connection member (70), and nipped together with the connection member between the positive and negative contact members. Then the battery (66) and the connection member (70) are held between the supporting projections. On manufacturing another lens-fitted photo film unit that contains a longer battery (96) than the battery (50), the supporting projection (35) is cut away, and a supporting member (91) is affixed instead, to produce a second main body portion (89) that is adapted to hold the longer battery (96).

## Description

### FIELD OF THE INVENTION

The present invention relates to a method of manufacturing different kinds of lens-fitted photo film units which contain a battery of a different size from each other, using almost the same components. The present invention relates also to lens-fitted photo film units manufactured according to the method of the present invention.

### BACKGROUND ARTS

Lens-fitted photo film units are well-known as a kind of single-use handy camera that is preloaded with photographic film. Conventional lens-fitted photo film units generally contain a dry battery of AA-size or AAA-size. The dry battery mainly serves as a power source for a flash unit that is incorporated in the lens-fitted photo film unit. The dry battery of AA-size or AAA-size is relatively large in size and weight in comparison with other parts or components of the lens-fitted photo film unit. In order to minimize the lens-fitted photo film unit, it has been necessary to study how to arrange the dry battery in the lens-fitted photo film unit.

According to Japanese Laid-open Patent Application No. Hei 10-254033, a lens-fitted photo film unit has a unit body that comprises a lens barrel portion holding a taking lens and other photographic mechanisms, a cartridge chamber holding a cartridge shell, and a scroll chamber that holds a roll of unexposed photo filmstrip that is withdrawn from the cartridge shell, and a dry battery is placed in a space between the lens barrel portion and the cartridge chamber, while a main capacitor of a flash unit is placed in a space between the lens barrel portion and the scroll chamber. Thereby the space efficiency is improved so as to minimize the lens-fitted photo film unit.

Recently the flash circuit has been gaining power-saving features for reduction of environmental burdens, so the power source to the flash circuit is expected to change over from the large capacitance AA-size battery to the smaller AAA-size battery or a battery of a smaller size than the AAA-size, for the purpose of reducing carbon dioxide emissions. Therefore, it is possible to improve the space efficiency of the lens-fitted photo film unit to minimize it by use of the smaller AAA-size battery, or a still smaller battery that is different from any other standardized battery.

However, there are a variety of kinds of lens-fitted photo film units, some of which are expected to use the AA-size battery as conventional. If the components of the lens-fitted photo film unit are sized in accordance with the small battery, the lens-fitted photo film unit cannot hold the larger battery like the AA-size battery. On the contrary, varying the size of individual components depending upon the size of the battery will raise the cost of the lens-fitted photo film unit remarkably.

### SUMMARY OF THE INVENTION

In view of the foregoing, a primary object of the present invention is to provide a method of manufacturing lens-fitted photo film units containing different size batteries at a low cost.

Another object of the present invention is to provide different kinds of lens-fitted photo film units which contain different size batteries but are constituted of almost the same components.

To achieve the above objects in a lens-fitted photo film unit that comprises a main body portion having a cartridge chamber, a film roll chamber, an aperture located between the cartridge chamber and the film roll chamber, and a couple of supporting projections located between the cartridge chamber and the film roll chamber below the aperture, and a flash unit having a light emission circuit, a power supply circuit for supplying the light emission circuit, a light emitting portion actuated by the light emission circuit, which are mounted integrally on a circuit board, and a pair of contact members for connecting a power source battery to the power supply circuit, the lens-fitted photo film unit of the present invention is characterized in that:
the power source battery is a first cylindrical battery or a second cylindrical battery having a shorter axial length than the first cylindrical battery, wherein, when the first battery is used, the first battery is nipped at its opposite poles between the pair of electric contact members, and is held between the supporting members, to be securely mounted to the main body portion, whereas, when the second battery is used, a conductive connection member is disposed to bridge a gap between one of the electric contact members and one end of the second battery, such that the second battery is connected through the connection member to the electric contact members, and is held together with the connection member between the supporting members, to be securely mounted to the main body portion.

The connection member preferably has a resiliency.

According to the present invention, in a lens-fitted photo film unit comprising a main body portion having a cartridge chamber, a film roll chamber, an aperture located between the cartridge chamber and the film roll chamber, and a couple of supporting projections located between the cartridge chamber and the film roll chamber below the aperture, and a flash unit having a light emission circuit, a power supply circuit for supplying the light emission circuit, a light emitting portion actuated by the light emission circuit, which are mounted on a circuit board, and a pair of contact members for connecting a power source battery to the power supply circuit, the lens-fitted photo film unit is characterized in that:
the power source battery is a first cylindrical battery or a second cylindrical battery having a shorter axial length than the first cylindrical battery, wherein, when the first battery is used, the first battery is nipped at its opposite poles between the pair of electric contact members, and is held between the supporting members, thereby being securely attached to the main body portion, whereas, when the second battery is used, a third electric contact member is connected to the circuit board in place of one of the electric contact members, such that the third electric contact member is brought into contact with one pole of the second battery, and a spacer is disposed to bridge a gap between one of the supporting projections and the one pole of the second battery, such that the third electric contact member is nipped between the spacer and the one pole, while an opposite pole of the second battery is in contact with the other of the electric contact members, and that the second battery is held together with the spacer between the supporting projections, to be securely attached to the main body portion.

Also in a lens-fitted photo film unit comprising a main body portion having a cartridge chamber, a film roll chamber, an aperture located between the cartridge chamber and the film roll chamber, and a couple of supporting projections formed between the cartridge chamber and the film roll chamber below the aperture, and a flash unit having a light emission circuit, a power supply circuit for supplying the light emission circuit, and a light emitting portion actuated by the light emission circuit, which are mounted integrally on a circuit board, and a pair of electric contact members for connecting a power source battery to the power supply circuit, the lens-fitted photo film unit of the present invention is characterized in that:
the power source battery is a first cylindrical battery or a second cylindrical battery having a shorter axial length than the first cylindrical battery, wherein, when the first battery is used, the first battery is nipped at its opposite poles between the pair of electric contact members, and is held between the supporting members, thereby being securely mounted to the main body portion, whereas, when the second battery is used, the second battery is held between the supporting projections, while a negative electrode of the second battery, which is provided on one end of the second battery, is brought into contact with one of the electric contact members, and a positive electrode of the second battery, which is provided on an opposite end and on a cylindrical surface that is continued from the opposite end, is securely joined to and electrically connected to the other of the electric contact members by welding, while pealing a coating formed around the cylindrical surface of the second battery.

The present invention also provides a method of manufacturing a second lens-fitted photo film unit containing a second battery that is longer in axial length than a first battery, by use of components of a first lens-fitted photo film unit that contains the first battery and comprises a first main body portion, the first main body portion being formed as an integral body having a cartridge chamber, a film roll chamber, an aperture located between the cartridge chamber and the film roll chamber, and at least a supporting projection located below the aperture, for holding the first battery between the supporting projection and the cartridge chamber or the film roll chamber. The method of the present invention comprises steps of:
cutting the supporting projection totally or partly from the first main body portion; and affixing a supporting member in place of the supporting projection to form a second main body portion, such that the second battery is held between the supporting member and the cartridge chamber or the film roll chamber.

The present invention further provides a lens-fitted photo film unit comprising:
a second main body portion formed from a first main body portion that is formed as an integral body having a cartridge chamber, a film roll chamber, an aperture located between the cartridge chamber and the film roll chamber, and at least a supporting projection located below the aperture, for holding a first battery between the supporting projection and the cartridge chamber or the film roll chamber, the second main body portion being formed by cutting the supporting projection totally or partly from the first main body portion, and affixing a supporting member in place of the supporting projection;
a second battery having a longer axial length than the first battery, the second battery being held between the supporting member and the cartridge chamber or the film roll chamber;
a flash unit having a light emission circuit, a power supply circuit for supplying the light emission circuit, and a light emitting portion actuated by the light emission circuit, which are mounted integrally on a circuit board; and
an electric contact member nipped between the second battery and the supporting member, to connect the second battery electrically to the circuit board.

According to a preferred embodiment, the electric contact member is connected to the circuit board through a lead wire.

### BRIEF DESCRIPTION OF THE DRAWINGS

The above and other objects and advantages of the present invention will become more apparent from the following detailed description of the preferred embodiments when read in connection with the accompanying drawings, wherein like reference numerals designate like or corresponding parts throughout the several views, wherein:
Figure 1 is a front perspective view of a first lens-fitted photo film unit containing a first kind of battery;
Figure 2 is an exploded perspective view of the first lens-fitted photo film unit;
Figure 3 is an exploded perspective view illustrating a main body portion and a flash unit of the first lens-fitted photo film unit;
Figure 4 is a horizontal sectional view of the first lens-fitted photo film unit, as viewed from the bottom;
Figure 5 is a horizontal sectional view of a second lens-fitted photo film unit containing a second kind of battery;
Figure 6 is an exploded perspective view illustrating a flash unit and a main body portion of the second lens-fitted photo film unit;
Figure 7 is a horizontal sectional view of a lens-fitted photo film unit according to another embodiment of the present invention;
Figure 8 is a horizontal sectional view of a lens-fitted photo film unit according to still another embodiment of the present invention;
Figures 9A, 9B and 9C are explanatory diagrams illustrating a process of making a second main body portion from the main body portion of the first lens-fitted photo film unit;
Figure 10 is an exploded perspective view illustrating the second main body portion and a flash unit; and
Figure 11 is a horizontal sectional view of a fifth lens-fitted photo film unit manufactured by use of the second main body portion.

### DESCRIPTION OF THE PREFERRED EMBODIMENTS

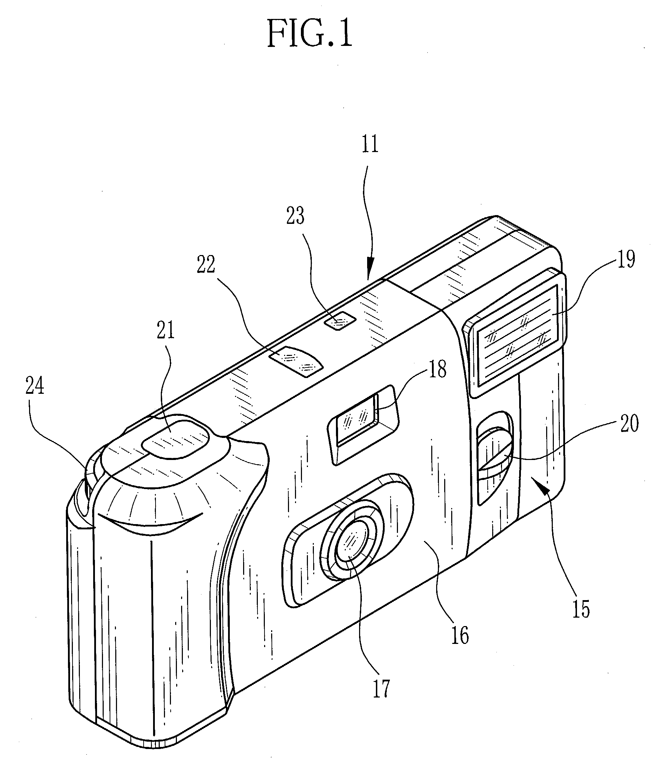

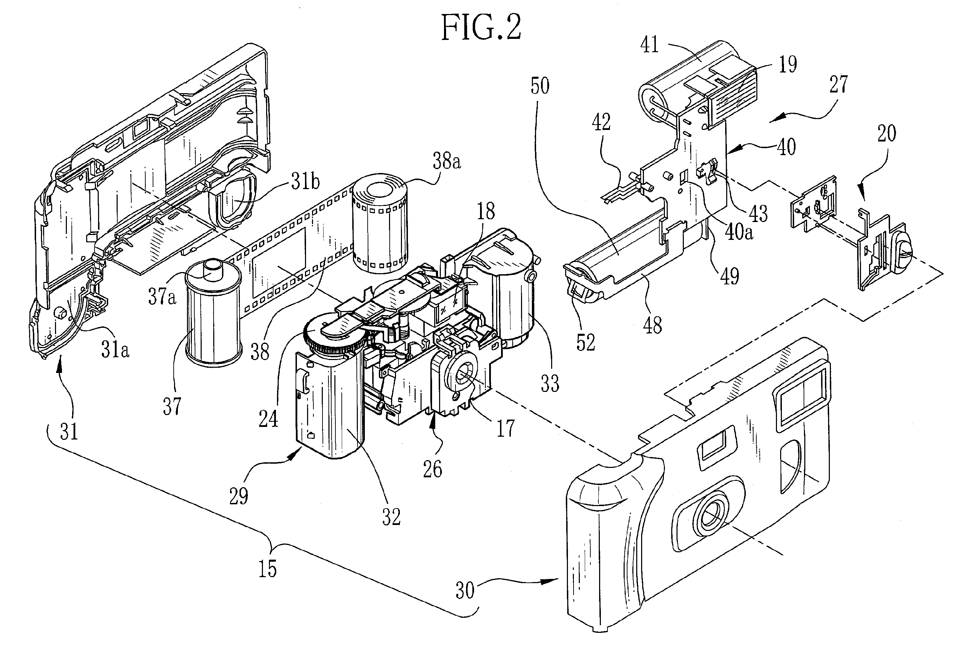

As shown in Figs.1 and 2, a lens-fitted photo film unit 11 according to the present invention consists of a film unit body 15 having a photographic mechanism incorporated therein, and an ornamental label 16 put around the film unit body 15. The film unit body 15 has at its front side a photographic lens 17, a viewfinder objective window 18, a flash light emitting portion 19, and a flash charge button 20. The film unit body 15 is provided at its top side with a shutter release button 21, an exposure counter window 22, and a light guide 23 as a flash charge completion indicator. On the rear side of the film unit body 15 are provided a film winding knob 24 and an ocular side viewfinder window.

As shown in Fig.2, the film unit body 15 is constituted of a main body portion 29 having an exposure device 26, a flash unit 27 and other mechanisms mounted thereto, and front and rear cover portions 30 and 31 attached to the main body portion 29 to cover the front and rear sides thereof. The front cover portion 30 is formed with openings for exposing the photographic lens 17, the viewfinder objective lens 18, the flash light emitting portion 19, the flash charge button 20 and other necessary parts.

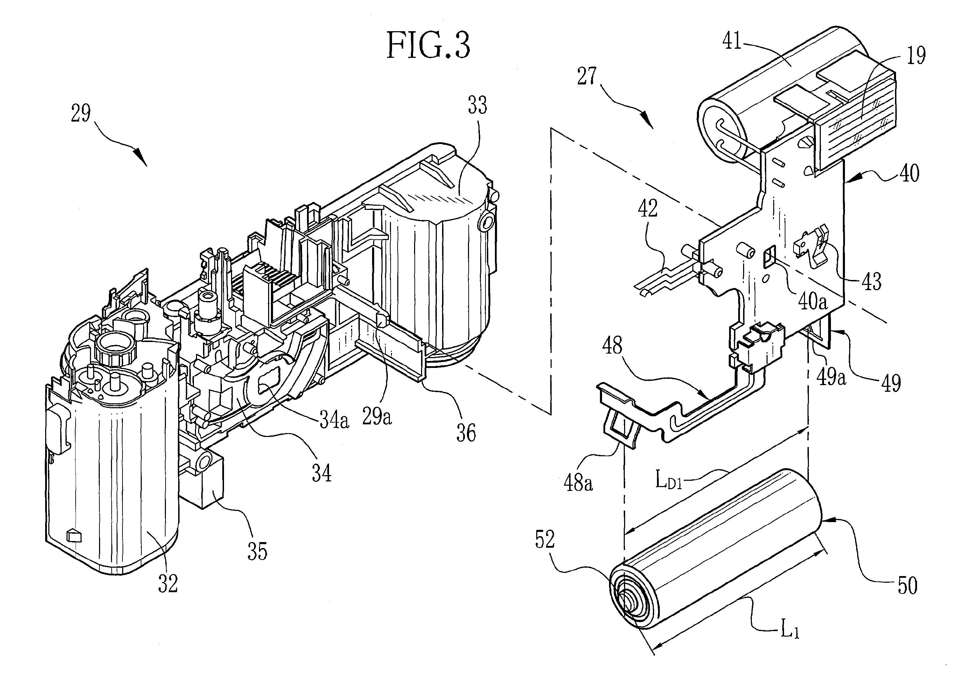

As shown in Fig. 3, the main body portion 29 has a cartridge chamber 32, a film roll chamber 33, and an image tunnel 34 that is disposed between these chambers 32 and 33. An aperture 34a is formed through the image tunnel 34, through which light from the taking lens 17 enters. The main body portion 29 is formed as an integral body. The exposure device 26 is mounted to the front of the image tunnel 34. A couple of supporting projections 35 and 36 are also formed integrally with the main body portion 29. The supporting projections 35 and 36 protrude forwards between the cartridge chamber 32 and the film roll chamber 33. The supporting projection 35 is located below the aperture 34a. The supporting projection 36 is located in the vicinity of a lower portion of the film roll chamber 33, that is, below the aperture 34a. Although the image tunnel 34 is formed integrally with the main body portion 29 in this embodiment, it is possible to form at least a fragment of an image tunnel integrally with a base frame of the exposure device.

The flash unit 27 is mounted between the exposure device 26 and the film roll chamber 33 through hooks, including a hook 29a. The cartridge chamber 32 and the film roll chamber 33 respectively hold a photo film cartridge 37 and a roll 38a of unexposed photographic film 38 that is previously pulled out from the cartridge 37 and rolled. The film winding knob 24 is disposed pivotally on top of the cartridge chamber 32 such that a bottom shaft of the knob 24 is engaged in a spool 37a of the photo film cartridge 37 as it is held in the cartridge chamber 32. Turning the film winding knob 24 in a counterclockwise direction in this Figure is winding the photographic film 38 into the photo film cartridge 37.

The rear cover portion 31 is attached to cover the rear side of the main body portion 29, and form a film passageway between the rear cover portion 31 and the main body portion 29, from the film roll chamber 33 through behind the aperture 34a to the cartridge chamber 32. Through this film passageway, the photographic film 38 is fed from the film roll chamber 33 into the photo film cartridge 37 as held in the cartridge chamber 32. Bottom lids 31a and 31b are formed integrally with the rear cover portion 31, so as to close bottom sides of the cartridge chamber 32 and the film roll chamber 33 light-tightly. By closing the rear and bottom sides of the main body portion 29 with the rear cover portion 31, a dark room 39 is formed between these portions 29 and 31.

The flash unit 27 is a unit as shown in detail in Fig.3, wherein the flash emitting portion 19, a main capacitor 41, a synch-switch 42 and other elements are mounted on a circuit board 40. Although it is not shown in the drawings, a light emission circuit for activating the flash light emitting portion 19, and a power supply circuit for supplying the light emission circuit are also mounted integrally on the circuit board 40. The circuit board 40 is further formed with an engaging opening 40a for the engagement with the hook 29a of the main body portion 29.

When the flash charge button 20 is slid upward, a metal contact 43 of a charge switch, which is provided on the circuit board 40, is actuated to turn the power supply circuit ON, starting charging the main capacitor 41. The flash unit 27 is designed to emit a flash of light when the synch-switch 42 is turned on by a not-shown shutter blade that swings when a shutter mechanism is actuated by pressing the release button 41.

A positive contact member 48 and a negative contact member 49 are mounted to a bottom side of the circuit board 40. The positive and negative contact members 48 and 49 are each formed by bending a metal blade, and are secured to the circuit board 40 by engagement and soldering, so that they are connected to the power supply circuit. When positive and negative poles 52 and 53 of a battery 50 are brought into contact with the positive and negative contact members 48 and 49 respectively, the battery 50 is electrically connected to the power supply circuit.

The size of the positive and negative contacts 48 and 49 is determined in accordance with the size of the battery 50. That is, a distance LD1 from a contact point 48a of the positive contact member 48 with the positive pole 52 to a contact point 49a of the negative contact member 49 with the negative pole 53 is determined by an axial length L1 of the battery 50.

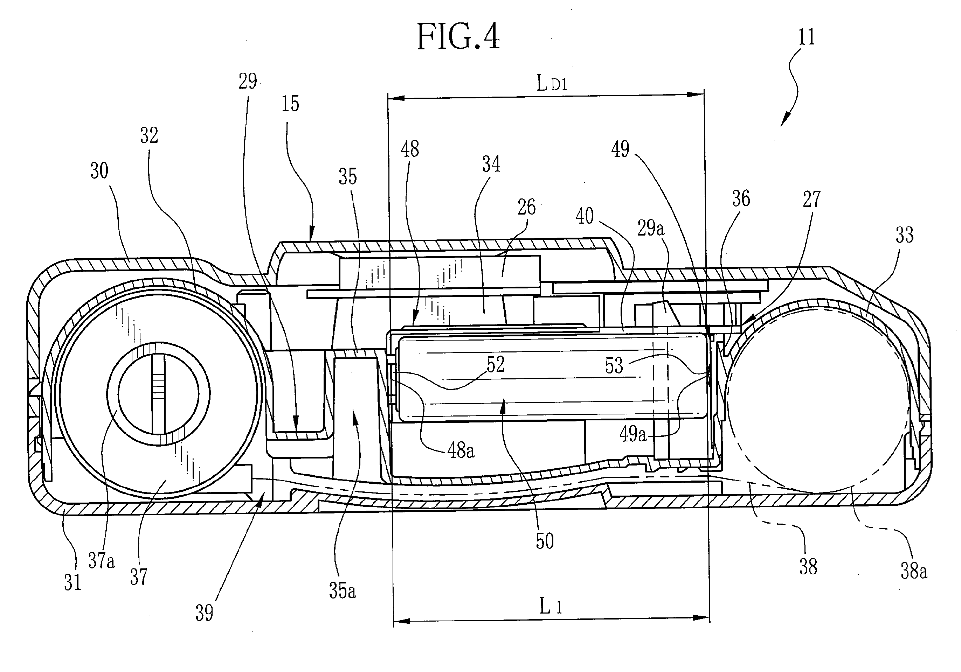

Internal structure of the lens-fitted photo film unit 11 around the battery holder 40 is shown in detail in Fig. 4. The battery 50 is nipped between the positive and negative contact members 48 and 49 by virtue of resiliencies of these contact members 48 and 49, and is securely attached along with the flash unit 27 to the main body portion 29. In this position, the supporting projections 35 and 36 are in contact with the positive and negative contact members 48 and 49 respectively. Therefore, the battery 50 is held between the supporting projections 35 and 36, and is thus securely placed between the cartridge chamber 32 and the film roll chamber 33 below the aperture 34a.

Now an embodiment of manufacturing a second lens-fitted photo film unit will be described. The second lens-fitted photo film unit uses a smaller power source battery than the battery 50, but uses almost the same components as the above-described lens-fitted photo film unit 11. In the following embodiments, like or same components will be designated by the same reference numerals as those of the first lens-fitted photo film unit 11, so that the description of these components will be omitted for brevity sake.

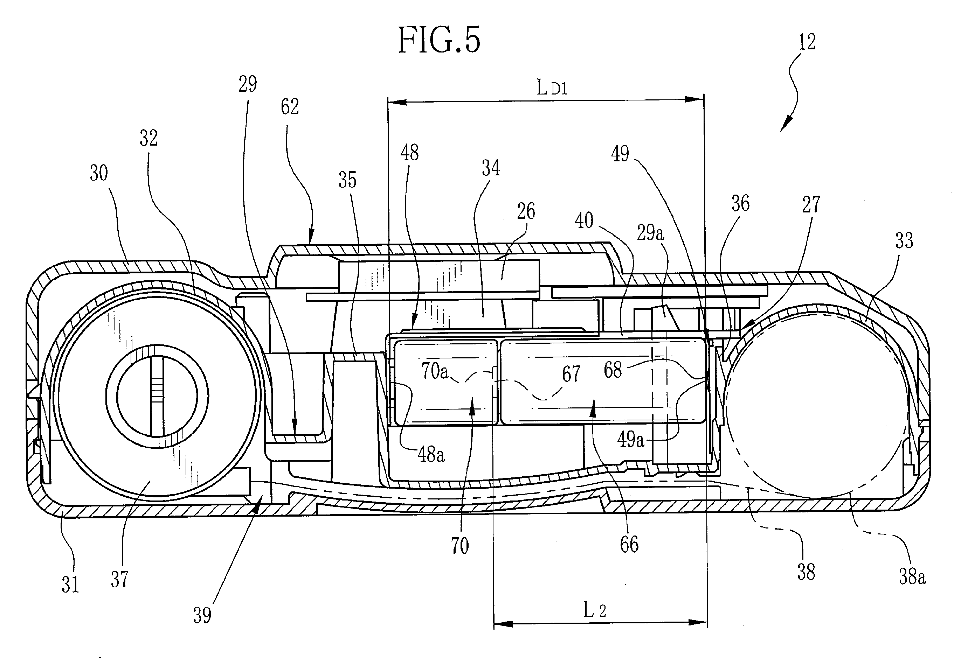

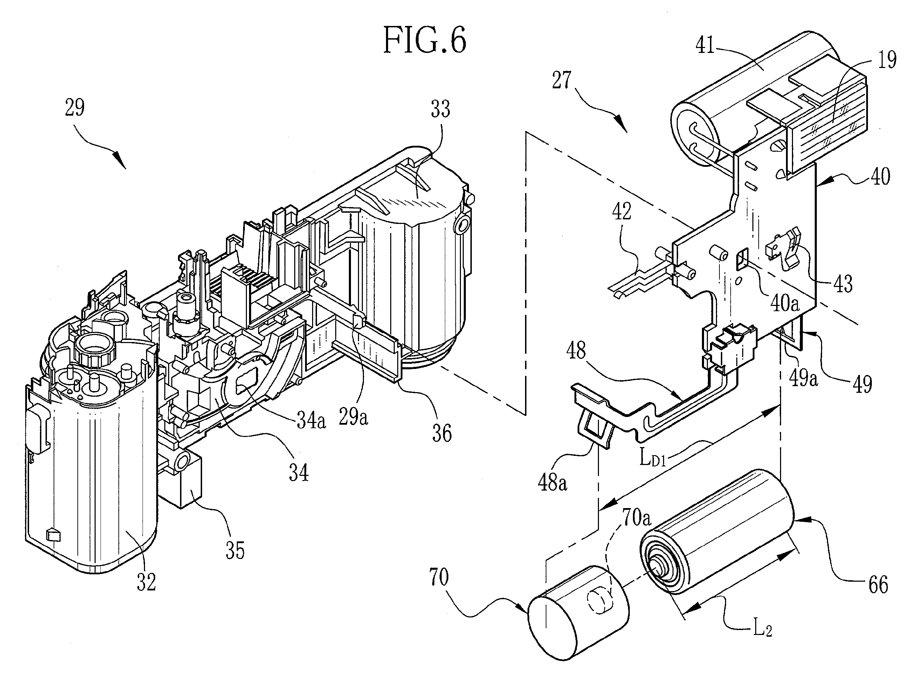

As shown in Figs. 5 and 6, the second battery 66 used in the second lens-fitted photo film unit 12 has a shorter axial length L2 than the axial length L1 of the first battery 50. In the present embodiment, it is assumed that the first battery 50 used in the first lens-fitted photo film unit 11 is a standardized battery, e.g. AA-size battery, while the second battery 66 is a specific battery that has a shorter axial length than the AA-size battery.

The second lens-fitted photo film unit 12 has a film unit body 62, wherein an exposure device 26 and other photographic mechanisms, a flash unit 27 holding the battery 66 and a connection member 70 are mounted to a main body portion 29, and front and rear cover portions 30 and 31 cover the front and rear sides of the main body portion 29. All of these components, except the battery 66 and the connection member 70, are common to those of the first lens-fitted photo film unit 11.

The connection member 70 is made of a conductive metal blade by stamping. As described above, the flash unit 27 is dimensioned such that the distance LD1 from the contact point 48a of the positive contact member 48 to the contact point 49a of the negative contact member 49 is determined by the axial length L1 of the battery 50. Therefore, if a positive pole 67 of the second battery 66 is brought into contact with the contact point 48a of the positive contact member 48, a negative pole 68 of the second battery 50 is spaced apart from the contact point 49a of the negative contact member 49. On the contrary, if the negative pole 68 is brought into contact with the contact point 49a of the negative contact member 49, the positive pole 67 is spaced apart from the contact point 48a of the positive contact member 48. The connection member 70 has a length that corresponds to the spacing or gap between the positive pole 67 and the contact point 48a of the positive contact member 48, which is provided when the negative pole 68 of the second battery 66 is in contact with the contact point 49a of the negative contact member 49. The connection member 70 has a recess 70a formed in the center of its one end face, such that the recess 70a is fitted to the positive pole 67 of the second battery 66.

As the positive pole 67 is fitted in the recess 70a, the second battery 66 is connected in series to the connection member 70. While being connected in series to each other, the second battery 66 and the connection member 70 are nipped together between the positive and negative contact members 48 and 49. Then the negative pole 68 is connected directly to the negative contact member 49, whereas the positive pole 67 is connected through the connection member 70 to the positive contact member 48, thereby to enable supplying electric power from the second battery 66 to the power supply circuit of the flash unit 27. As being nipped between the contact members 48 and 49, the second battery 66 is mounted along with the flash unit 27 to the main body portion 29. Thereby, the second battery 66 is held between the supporting projections 35 and 36, to be securely placed below the image tunnel 34.

The material of the connection member 70 preferably has a certain resiliency. Due to the resiliency, the connection member 70 may be pressed against the positive contact 48 and the positive pole 67 while the connection member 70 is nipped together with the second battery 66 between the contact members 48 and 49. Then the second battery 66 is more securely nipped between the contact members 48 and 49, so the electric connection is stabilized.

As described above, to assemble the lens-fitted photo film unit 11 using the first kind of battery 50, first the exposure device 26, the flash unit 27 and other photographic mechanisms are mounted to the main body portion 29. The battery 50, as being held by the flash unit 27, is mounted along with the flash unit 27 to the main body portion 29, so the battery 50 is securely placed between the supporting projections 35 and 36. Thereafter the front cover portion 30 and the rear cover portion 31 are attached to the main body portion 29, to make the film unit body 15. Then the label 16 is put around a middle zone of the film unit body 15, completing the lens-fitted photo film unit 11.

To assemble the second lens-fitted photo film unit 12, on the other hand, the second battery 66 is nipped together with the connection member 70 between the positive and negative contact members 48 and 49. Thereby the second battery 66 is connected to the flash unit 27. Then, the exposure device 26, the flash unit 27 and other photographic mechanisms are mounted to the main body portion 29. Together with the flash unit 27, the second battery 66 is mounted to the main body portion 29, so that the second battery 66 is placed between the supporting projections 35 and 36. Thereafter the front cover portion 30 and the rear cover portion 31 are attached to the main body portion 29, to make the film unit body 62. Then a label 16 is put around a middle zone of the film unit body 62, completing the lens-fitted photo film unit 12.

As described so far, the lens-fitted photo film units 11 and 12 are assembled using almost all components commonly. The second battery 66, which is shorter in axial length than the battery 50, may be connected to the flash unit 27 without the need for modifying the main body portion 29 or the flash unit 27, just by adding the connection member 70. Therefore, the lens-fitted photo film units 11 and 12 can be manufactured at a low cost without complicating the manufacturing process.

Although the connection member 70 is used for connecting the positive pole 67 of the second battery 66 electrically to the positive contact member 48, as well as for bridging the gap between the positive pole 67 and the positive contact member 48, the present invention is not limited to this embodiment.

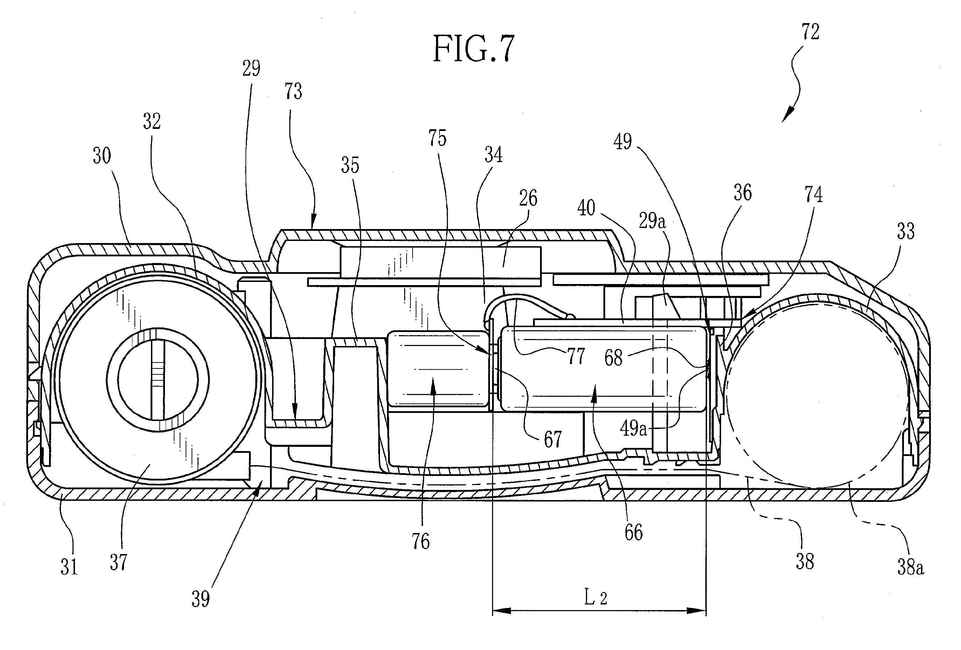

For example, an embodiment shown in Fig.7 will achieve the same effects as the above-described embodiment. A lens-fitted photo film unit 72 shown in Fig. 7 has a film unit body 73, wherein a flash unit 74 is mounted to a main body portion 29 along with an exposure device 26 and other photographic mechanisms, and then front and rear cover portions 30 and 31 cover the front and rear sides of the main body portion 29. In the flash unit 74 of the lens-fitted photo film unit 72, a negative contact member 49 is mounted to a bottom side of a circuit board 40, whereas a positive contact member 75 is connected through a lead wire 77 to the circuit board 40. That is, the lead wire 77 is connected at one end to the positive contact member 75 and at the opposite end to the circuit board 40 respectively by soldering. The positive contact 75 is securely attached to a spacer 76, and the spacer 76 is securely attached to the supporting projection 35, respectively through bonding or welding.

The positive and negative contact members 75 and 49 of the flash unit 74 are brought into contact with the positive and negative poles 67 and 68 of the second battery 66 respectively. Thereby, the second battery 66 is connected electrically to a power supply circuit of the flash unit 74.

In the embodiment shown in Fig.7, the second battery 66 is put into between the positive and negative contact members 75 and 49, after the flash unit 74 and the spacer 76 are mounted to the main body portion 29. Thereby, the battery 66 is securely mounted to the main body portion 29. That is, the positive contact member 75 is nipped between the positive pole 67 of the second battery 66 and the spacer 76, whereas the negative contact member 49 comes to contact with the negative pole 68. Thereby the second battery 66 is held between the supporting projections 35 and 36, while being bridged by the spacer 76. Thus, the second battery 66 is securely placed below an aperture 34a between a cartridge chamber 32 and a film roll chamber 33. Consequently, a lens-fitted photo film unit containing a shorter battery can be manufactured at a low cost by use of common components except the flash unit, by connecting the positive contact member 75 through the lead wire 77 to the circuit board 49, and bridging the space between the positive contact member 75 and the supporting projection 35 with the spacer 76.

It is to be noted that the positive contact member 75 may be a small chip that has an area sufficient for making contact with the positive pole 67. Therefore, an area around the contact point 48a of the positive contact 48 of the first flash unit 27 may be cut to be used as the positive contact member 75. Although the lead wire 77 is used for connecting the positive contact member 75 to the circuit board 40, it is possible to form a positive contact member shorter than the positive contact member 48, and connect the shorter contact member directly to the circuit board 40, in order to hold the shorter battery 66 between the positive and negative contact members.

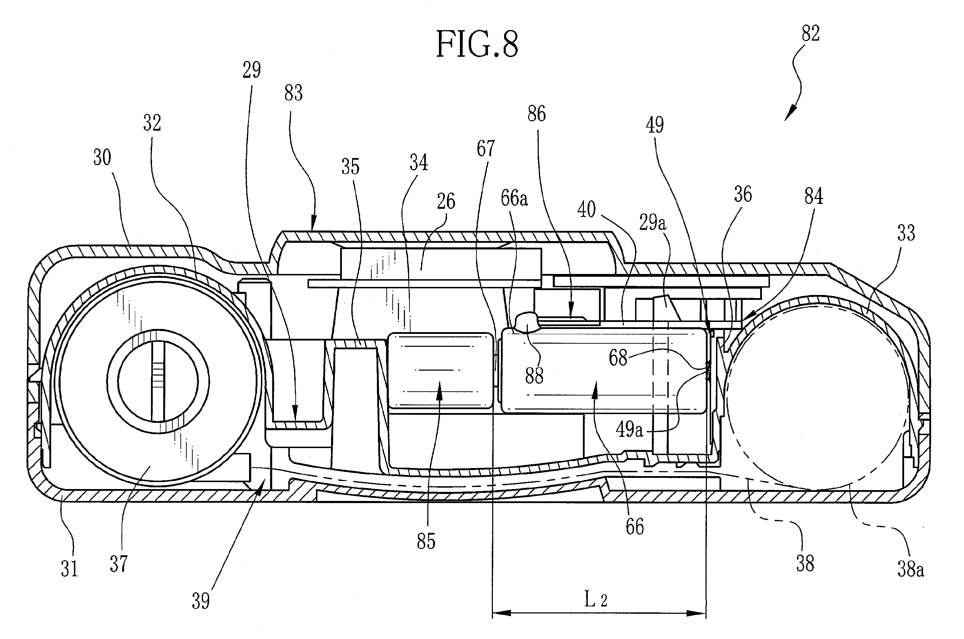

It is also possible to affix the positive contact member to the second battery 66 by welding, such that they are connected electrically to each other, as shown for example in Fig.8. A lens-fitted photo film unit 82 shown in Fig.8 has a film unit body 83 whose main body portion 29 and exposure unit 26 including photographic mechanisms are common to those of the lens-fitted photo film unit 11. Also a front cover portion 30 and a rear cover portion 31 are common to those of the lens-fitted photo film unit 11. In a flash unit 84 of the lens-fitted photo film unit 82, a positive contact member 86 and a negative contact member 49 are mounted to a bottom side of a circuit board 40. The negative contact member 49 is in contact with the negative pole 68 of the second battery 66 in the same way as the above embodiments. On the other hand, the positive contact member 86 is welded at its tip onto a cylindrical surface 66a of a metal casing of the second battery 66. Designated by 88 is the welding portion. It is to be noted that the metal casing is formed integrally with the positive pole 67, so the metal casing can be used as the positive electrode of the battery 66. Although the cylindrical surface 66a is wrapped with an isolating label, the label is melt away by welding, so that the positive contact member 86 is electrically connected to the positive electrode of the battery 66, beside being affixed to the metal casing.

A spacer 85 is securely attached to the supporting projection by bonding or welding. Like the spacer 76, the spacer 85 has a size corresponding to the gap between the supporting projection 35 and the positive pole 67 of the battery 66. Therefore, the second battery 66 is securely mounted to the flash unit 84 by being pressed against the negative contact member 49, and welded to the positive contact member 86. Thereafter the second battery 66 is securely attached together with the flash unit 84 to the main body portion 29. Then the positive pole 67 is brought into contact with the spacer 85, whereas the negative pole 68 is brought into contact with the negative contact member 49. Thereby the second battery 66 is held through the spacer 85 between the supporting projections 35 and 36. Thus, the second battery 66 is securely placed below an image tunnel 34 between a cartridge chamber 32 and a film roll chamber 33. The length of the positive contact member 86 can be so short as to reach the cylindrical surface 66a of the battery 66. Therefore, it is possible to use a base portion of the positive contact member 48 as the positive contact member 86 by cutting away a distal portion of the positive contact member 48.

Now another embodiment will be described, wherein a lens-fitted photo film unit 100 containing a larger battery than the first battery 50 is assembled by use of mostly the same components as used in the first lens-fitted photo film unit 11. In this embodiment, the battery 50 is assumed to be a specific battery to the lens-fitted photo film unit 11, which has a shorter axial length than the AA-size or AAA-size battery, whereas the larger battery is assumed to be the AA-size or AAA-size. Also in this embodiment, the same components as used in the first lens-fitted photo film unit 11 are designated by the same reference numerals, so that the details of these components are omitted to avoid redundancy.

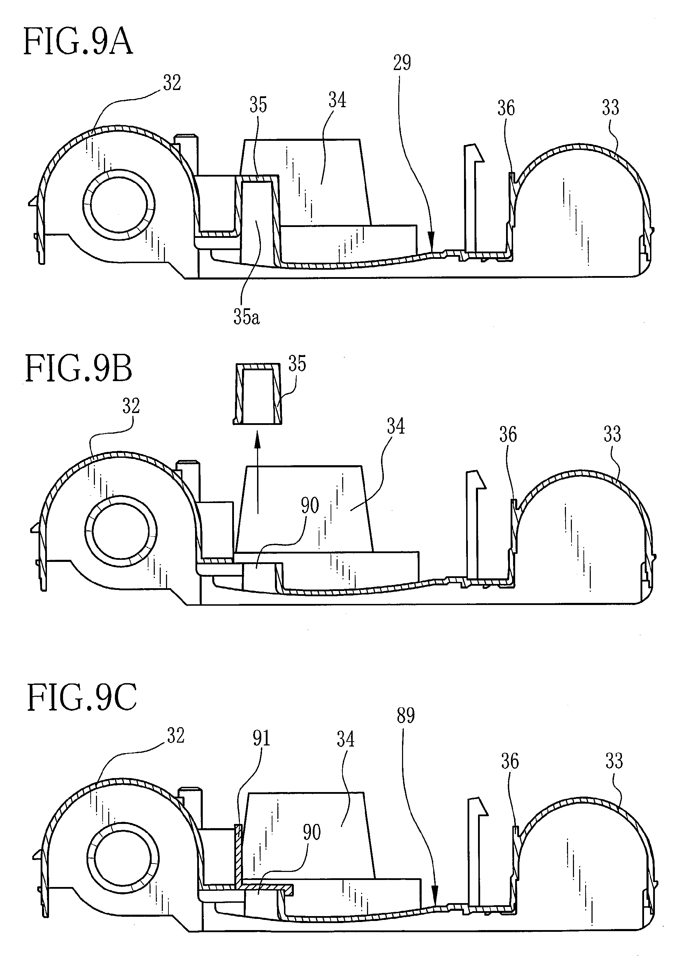

The lens-fitted photo film unit 100 uses a second main body portion 89 that is formed by modifying a main body portion 29 that is used for assembling the first lens-fitted photo film unit 11. Figs.9A to 9C show the process of forming the second main body portion 89 from the main body portion 29.

Fig.9A shows the main body portion 29 before being modified. The main body portion 29 is formed as an integral body from a resin. One 35 of the supporting projections 35 and 36, which is placed on the positive side of the battery, has a hollow 35a that continues to the dark room 39 in the assembled lens-fitted photo film unit 11.

First, as shown in Fig.9B, the supporting projection 35 having the hollow 35a is cut away at the base from the main body portion 29. Then, an opening 90 is formed through the main body portion 29 at the position where the supporting projection 35 is cut away. The opening 90 is covered with a supporting member 91 instead of the supporting projection 35. By affixing the supporting member 91, the second main body portion 89 is completed.

The supporting member 91 is configured as shown in detail in Figs.6 and 7. The supporting member 91 substantially has an L-shape consisting of a forward projection 91a and a cover plate 91b that protrudes from a rear end of the forward projection 91a perpendicularly to the forward projection. Furthermore, positioning ridges 91c and 91d are formed integrally on an opposite side of the forward projection 91a from the cover plate 91b, and on a rear side of the cover plate 91b. To affix the supporting member 91, the positioning ridges 91c and 91d are put on edges of the opening 90 so as to position the supporting member 91 properly to cover the opening 90, before the supporting member 91 is bonded or welded. Because the opening 90 is closed in this way, the dark room 39 is kept light-tight like in the first lens-fitted photo film unit 11.

In comparison with the position of the supporting projection 35 of the first main body portion 29, the forward projection 91a of the supporting member 91 is positioned closer to the cartridge chamber 32 in the second main body portion 89. Accordingly, the distance of the forward projection 91a from the negative side supporting projection 36 is longer than the distance between the supporting projections 35 and 36, permitting holding a longer battery than the first battery 50.

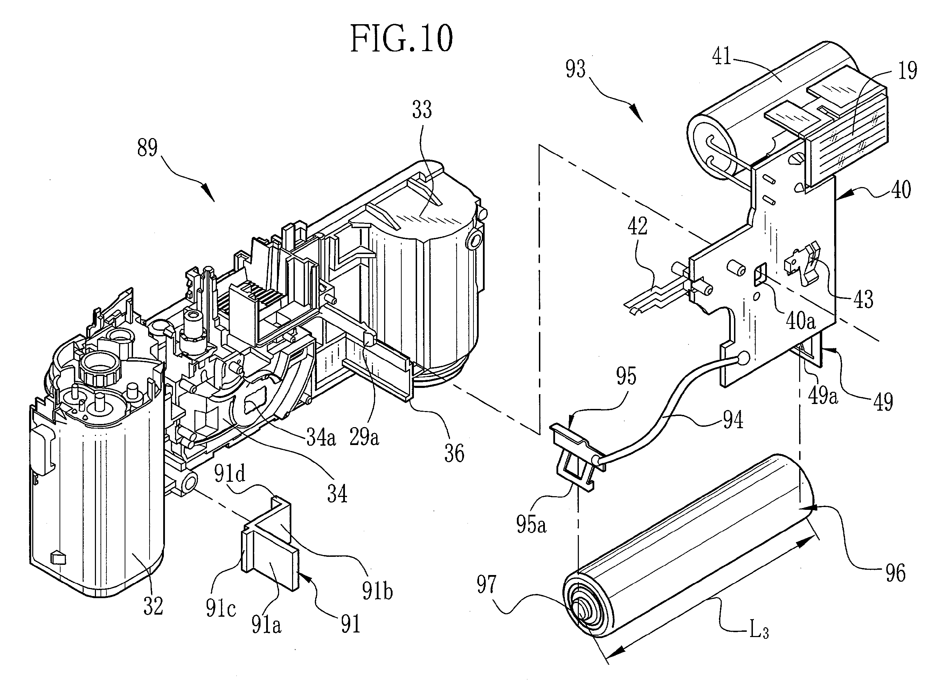

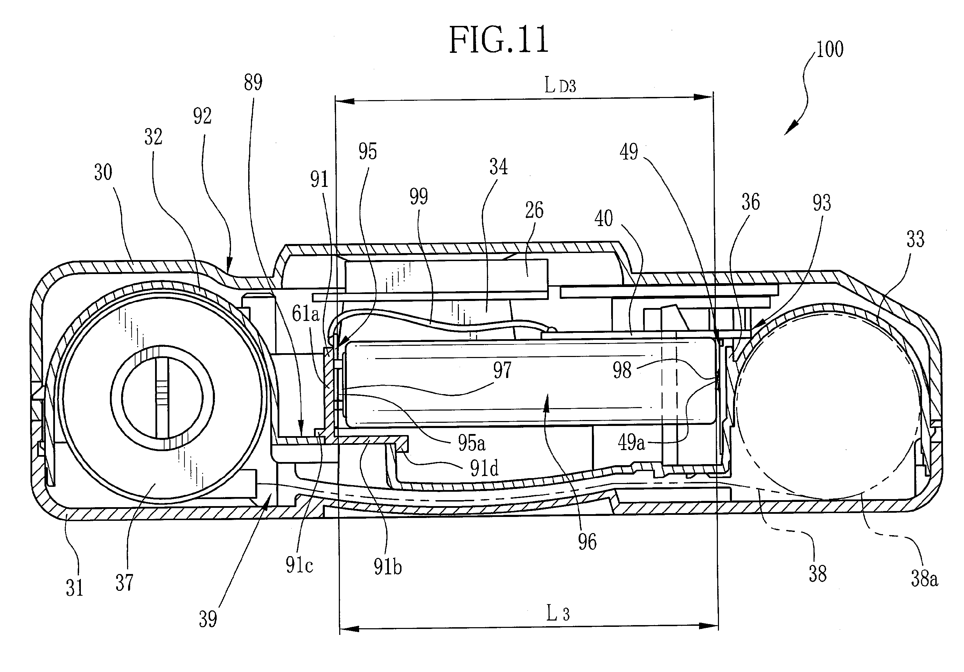

As shown in Figs. 10 and 11, the lens-fitted photo film unit 100 has a film unit body 92, wherein an exposure device 26 and other photographic mechanisms and a flash unit 93 are mounted to the second main body portion 89, and front and rear cover portions 30 and 31 cover the front and rear sides of the main body portion 89.

In the flash unit 93 of the lens-fitted photo film unit 100, a negative contact member 49 is mounted to a bottom side of a circuit board 40, whereas a positive contact member 95 is connected through a lead wire 94 to the circuit board 40. That is, one end of the lead wire 94 is connected to the positive contact member 95, and the opposite end is connected to the circuit board 40, respectively by soldering. The positive contact member is formed from a metal blade by bending it into a substantially rectangular plate. The positive contact member 95 is affixed to the forward projection of the supporting member 91, for example, by bonding. On the other hand, the negative contact member 49 comes to contact with the supporting projection 36 when the flash unit 93 is mounted to the main body portion 89.

In the present embodiment, the lens-fitted photo film unit 100 contains a battery 96 whose axial length L3 is longer than the axial length L1 of the first battery 50. Therefore, the distance LD3 from a contact point 95a of the positive contact member 95 with a positive pole 97 of the battery 96 to a contact point 49a of the negative contact member 49 with a negative pole 98 of the battery 96 is determined by the axial length L3 of the battery 96. That is, as described above, the distance between the forward projection 91a of the positive side supporting member 91 and the negative side supporting projection 36 is defined to permit holding the longer battery 96.

In this embodiment, the longer battery 96 is put into between the positive and negative contact members 95 and 49, after the flash unit 93 is mounted to the second main body portion 89. Thereby, the battery 96 is securely mounted to the main body portion 89. That is, the positive contact member 95 is held between the positive pole 97 of the second battery 91 and the supporting member 91, whereas the negative contact member 49 comes to contact with the negative pole 68. Thereby the battery 96 is held securely between the supporting member 91 and the supporting projection 36 below the image tunnel 34 between the cartridge chamber 32 and the film roll chamber 33.

To assemble the lens-fitted photo film unit 100, the second main body portion 89 is formed by cutting the supporting projection 35 away from the first main body portion 29, and affixing the supporting member 91 in place of the supporting projection 35. After the flash unit 93 is mounted along with the exposure device 26 and other mechanisms to the main body portion 89, and the positive contact member 95 is affixed to the forward projection 91a of the supporting member 91, the battery 96 is put into between the positive and negative contact members 95 and 49. Thereby, the battery 96 is securely mounted to the main body portion 89. Thereafter the front cover portion 30 and the rear cover portion 31 are attached to the main body portion 89, to make the film unit body 92. Then a label 16 is put around a middle zone of the film unit body 92, completing the lens-fitted photo film unit 100.

As described so far, the lens-fitted photo film units 11 and 100 are manufactured using most of the components commonly. Since the lens-fitted photo film unit 100 can contain the longer battery 96 than the battery 50 just by modifying the main body portion 29 and the flash unit 27 of the first lens-fitted photo film units 11, these two kinds of lens-fitted photo film units 11 and 100 can be manufactured at a low cost without complicating the manufacturing processes.

It is to be noted that the positive contact member 95 may be a small chip. Therefore, an area around the contact point 48a of the positive contact 48 of the first flash unit 27 may be cut to be used as the positive contact member 95. Although the lead wire 94 is used for connecting the positive contact member 95 to the circuit board 40, it is possible to form a longer positive contact member than the positive contact member 48, and connect the longer contact member directly to the circuit board 40, in order to hold the longer battery 96 between the positive and negative contact members.

In the embodiment shown in Figs.9 to 11, only the positive side supporting projection 35 is cut away from the main body portion 29, and the supporting member 91 is affixed in place of the supporting projection 35 to form the second main body portion 89. Alternatively, it is possible to cut both of the supporting projections 35 and 36, and dispose supporting members in place of these projections 35 and 36, so as to provide a wider space for a battery. This embodiment is preferable for a case where there is a greater difference in axial length between two kinds of batteries for the lens-fitted photo film units. It is not always necessary to cut the whole supporting projection, but it is possible to cut a portion of the supporting projection in accordance with the size of the battery to be contained.

As described so far, the present invention is not to be limited to the illustrated embodiments but, on the contrary, various modifications will be possible without departing from the scope and spirit of the present invention as specified in the claims appended hereto.

## Claims

1. A lens-fitted photo film unit comprising a main body portion (29) having a cartridge chamber (32), a film roll chamber (33), an aperture (34a) located between said cartridge chamber and said film roll chamber, and a couple of supporting projections (35,36) located between said cartridge chamber and said film roll chamber below said aperture; and
a flash unit (27) having a light emission circuit, a power supply circuit for supplying said light emission circuit, a light emitting portion actuated by said light emission circuit, which are mounted integrally on a circuit board (40), and a pair of electric contact members (48,49) for connecting a power source battery to said power supply circuit;
said lens-fitted photo film unit being **characterized in that**:
said power source battery is a first cylindrical battery (50) or a second cylindrical battery (66) having a shorter axial length than said first cylindrical battery, wherein, when said first battery is used, said first battery is nipped at its opposite poles (52,53) between said pair of electric contact members, and is held between said supporting members, to be securely mounted to said main body portion, whereas, when said second battery is used, a conductive connection member (70) is disposed to bridge a gap between one (48) of said electric contact members and one end (67) of said second battery, such that said second battery is connected through said connection member to said electric contact members, and is held together with said connection member between said supporting members, to be securely mounted to said main body portion.

2. A lens-fitted photo film unit as claimed in claim 1, wherein said connection member has a resiliency.

3. A lens-fitted photo film unit comprising a main body portion (29) having a cartridge chamber (32), a film roll chamber (33), an aperture (34a) located between said cartridge chamber and said film roll chamber, and a couple of supporting projections (35,36) located between said cartridge chamber and said film roll chamber below said aperture; and
a flash unit (27) having a light emission circuit, a power supply circuit for supplying said light emission circuit, a light emitting portion actuated by said light emission circuit, which are mounted integrally on a circuit board (40), and a pair of electric contact members (48,49) for connecting a power source battery to said power supply circuit;
said lens-fitted photo film unit being **characterized in that**:
said power source battery is a first cylindrical battery (50) or a second cylindrical battery (66) having a shorter axial length than said first cylindrical battery, wherein, when said first battery is used, said first battery is nipped at its opposite poles (52,53) between said pair of electric contact members, and is held between said supporting members, to be securely mounted to said main body portion, whereas, when said second battery is used, a third electric contact member (75) is connected to said circuit board in place of one (48) of said electric contact members, such that said third electric contact member (75) is brought into contact with one pole (67) of said second battery, and a spacer (76) is disposed to bridge a gap between one (35) of said supporting projections and said one pole (67) of said second battery, such that said third electric contact member (75) is nipped between said spacer (76) and said one pole (67), while an opposite pole (68) of said second battery is in contact with other (49) of said electric contact members, and that said second battery is held together with said spacer between said supporting projections, to be securely attached to said main body portion.

4. A lens-fitted photo film unit as claimed in claim 6, wherein said third electric contact member (75) is connected to said circuit board through a lead wire (77).

5. A lens-fitted photo film unit comprising a main body portion (29) having a cartridge chamber (32), a film roll chamber (33), an aperture (34a) located between said cartridge chamber and said film roll chamber, and a couple of supporting projections (35,36) located between said cartridge chamber and said film roll chamber below said aperture; and
a flash unit (27) having a light emission circuit, a power supply circuit for supplying said light emission circuit, a light emitting portion actuated by said light emission circuit, which are mounted integrally on a circuit board (40), and a pair of electric contact members (48,49;86,49) for connecting a power source battery to said power supply circuit;
said lens-fitted photo film unit being **characterized in that**:
said power source battery is a first cylindrical battery (50) or a second cylindrical battery (66) having a shorter axial length than said first cylindrical battery, wherein, when said first battery is used, said first battery is nipped at its opposite poles (52,53) between said pair of electric contact members (48,49), and is held between said supporting members, to be securely mounted to said main body portion, whereas, when said second battery is used, said second battery is held between said supporting projections, while a negative electrode (68) of said second battery, which is provided on one end of said second battery, is brought into contact with one (49) of said electric contact members, and a positive electrode of said second battery, which is provided on an opposite end (67) and on a cylindrical surface (66a) that is continued from said opposite end, is securely joined to and electrically connected to the other (86 ) of said electric contact members by welding, while pealing a coating formed around said cylindrical surface of said second battery.

6. A method of manufacturing a second lens-fitted photo film unit (100) containing a second battery (96) that is longer in axial length than a first battery (50), by use of components of a first lens-fitted photo film unit (11) that contains said first battery and comprises a first main body portion (29), said first main body portion being formed as an integral body having a cartridge chamber (32), a film roll chamber (33), an aperture (34a) located between said cartridge chamber and said film roll chamber, and at least a supporting projection (35,36) located below said aperture, for holding said first battery between said supporting projection and said cartridge chamber or said film roll chamber;
said method comprising steps of:
cutting said supporting projection (35) totally or partly from said first main body portion; and
affixing a supporting member (91) in place of said supporting projection (35) to form a second main body portion (89), such that said second battery is held between said supporting member and said cartridge chamber or said film roll chamber.

7. A lens-fitted photo film unit comprising:
a second main body portion (89) formed from a first main body portion (29) that is formed as an integral body having a cartridge chamber (32), a film roll chamber (33), an aperture (34a) located between said cartridge chamber and said film roll chamber, and at least a supporting projection (35,36) located below said aperture, for holding a first battery (50) between said supporting projection and said cartridge chamber or said film roll chamber, said second main body portion being formed by cutting said supporting projection (35) totally or partly from said first main body portion, and affixing a supporting member (91) in place of said supporting projection;
a second battery (96) having a longer axial length than said first battery, said second battery being held between said supporting member (91) and said cartridge chamber or said film roll chamber;
a flash unit (93) having a light emission circuit, a power supply circuit for supplying said light emission circuit, and a light emitting portion actuated by said light emission circuit, which are mounted integrally on a circuit board (40); and
an electric contact member (95) nipped between said second battery and said supporting member (91), to connect said second battery electrically to said circuit board (40).

8. A lens-fitted photo film unit as claimed in claim 7, wherein said electric contact member (95) is connected to said circuit board through a lead wire (94).

9. A method of manufacturing a second lens-fitted photo film unit (12) containing a second battery (66) that is shorter in axial length than a first battery (50), by use of components of a first lens-fitted photo film unit (11) that contains said first battery and comprises a main body portion (29) formed as an integral body having a cartridge chamber (32), a film roll chamber (33), an aperture (34a) formed between said cartridge chamber and said film roll chamber, and a couple of supporting projections (35,36) formed between said cartridge chamber and said film roll chamber below said aperture, and a circuit board (40) mounted with a pair of electric contact members (48,49) for nipping said first battery (50) at its opposite poles (48,49), wherein said first battery as nipped between said electric contact members is held between said supporting projections, to be securely placed in said main body portion, as said circuit board is attached to said main body portion, said method comprising steps of:
nipping said second battery between said pair of electric contact members while electrically connecting one (48) of said electric contact members to one pole (67) of said second battery through a conductive connection member (70) that bridges a gap between said one electric contact member (48) and said one pole (67); and
attaching thereafter said circuit board (40) to said main body portion, to hold said second battery and said connection member between said supporting projections.

10. A method of manufacturing a second lens-fitted photo film unit (72) containing a second battery (66) that is shorter in axial length than a first battery (50), by use of components of a first lens-fitted photo film unit (11) that contains said first battery and comprises a main body portion (29) formed as an integral body having a cartridge chamber (32), a film roll chamber (33), an aperture (34a) formed between said cartridge chamber and said film roll chamber, and a couple of supporting projections (35,36) located between said cartridge chamber and said film roll chamber below said aperture, and a circuit board (40) mounted with a pair of electric contact members (48,49) for nipping said first battery (50) at its opposite poles (48,49), wherein said first battery as nipped between said electric contact members is held between said supporting projections, to be securely placed in said main body portion, as said circuit board is attached to said main body portion,
said method comprising steps of:
providing a third electric contact member (75) in place of one (48) of said electric contact members, such that said third electric contact member is brought into contact with one pole (67) of said second battery;
affixing a spacer (76) to one (35) of said supporting projections, said spacer bridging a gap between said one supporting projection (35) and said one pole (67) of said second battery, said gap being provided when an opposite pole (68) of said second battery is brought into contact with the other (49) of said electric contact members;
nipping said third electric contact member between said spacer and said one pole, while bringing said opposite pole into contact with said other electric contact member, such that said second battery is held through said spacer between said supporting projections.

11. A method as claimed in claim 10, wherein said third electric contact member is connected to said circuit board through a lead wire, and is affixed to an opposite side of said spacer from said one supporting projection.

12. A method of manufacturing a second lens-fitted photo film unit (82) containing a second battery (66) that is cylindrical and shorter in axial length than a first battery (50), by use of components of a first lens-fitted photo film unit (11) that contains said first battery and comprises a main body portion (29), said main body portion being formed as an integral body having a cartridge chamber (32), a film roll chamber (33), an aperture (34a) located between said cartridge chamber and said film roll chamber, and a couple of supporting projections located below said aperture, for holding said first battery between said supporting projections, said method comprising steps of:
providing a pair of electric contact members (49,86) on a circuit board;
bringing one (49) of said electric contact members into contact with one electrode (68) of said second battery, which is provided on an end of said second battery;
affixing and electrically connecting the other (86) of said electric contact members to an opposite electrode of said second battery, which is provided on an opposite end (67) of said second battery and on a cylindrical surface (66a) continued from said opposite end, by welding said other electric contact member onto said cylindrical surface; and
attaching thereafter said circuit board (40) to said main body portion, to place said second battery between said supporting projections.

13. A method as claimed in claim 12, further comprising steps of affixing a spacer (85) to one (35) of said supporting projections, said spacer bridging a gap between said one supporting projection (35) and said opposite end (67) of said second battery, said gap being provided when said one electrode (68) of said second battery is brought into contact with said one electric contact member (49); and
holding said second battery, as being connected to said pair of electric contact members (49,86), between said spacer (85) and other (36) of said supporting projections.
